(19) Europäisches Patentamt
European Patent Office
Office européen des brevets

(11) Veröffentlichungsnummer: **0 096 301**
**A2**

(12) # EUROPÄISCHE PATENTANMELDUNG

(21) Anmeldenummer: 83105208.9

(22) Anmeldetag: 26.05.83

(51) Int. Cl.[3]: **C 08 L 69/00**
C 08 L 25/12, C 08 L 55/02

(30) Priorität: 08.06.82 DE 3221674
23.04.83 DE 3314736

(43) Veröffentlichungstag der Anmeldung:
21.12.83 Patentblatt 83/51

(84) Benannte Vertragsstaaten:
DE FR GB IT

(71) Anmelder: BAYER AG
Zentralbereich Patente, Marken und Lizenzen
D-5090 Leverkusen 1, Bayerwerk(DE)

(72) Erfinder: Peters, Horst, Dr.
Winterberg 25
D-5090 Leverkusen 3(DE)

(72) Erfinder: Serini, Volker, Dr.
Scheiblerstrasse 81
D-4150 Krefeld(DE)

(72) Erfinder: Lindner, Christian, Dr.
Riehler Strasse 200
D-5000 Köln 60(DE)

(72) Erfinder: Buekers, Josef
Kneinstrasse 58a
D-4150 Krefeld 1(DE)

(72) Erfinder: Morbitzer, Leo, Dr.
Rungestrasse 50
D-5000 Koeln 80(DE)

(54) **Einphasige Polymermischungen.**

(57) Gegenstand der vorliegenden Erfindung sind Mischungen aus Polycarbonaten mit Copolymeren und/oder Pfropfpolymeren auf Basis Styrol/Acrylnitril, wobei der Acrylnitrilanteil im Styrol-Acrylnitril-Copolymeren 6 bis 15 Gew.-% beträgt.

EP 0 096 301 A2

Croydon Printing Company Ltd

BAYER AKTIENGESELLSCHAFT 5090 Leverkusen, Bayerwerk

Zentralbereich
Patente, Marken und Lizenzen PS/m-c

# Einphasige Polymermischungen

Gegenstand der Erfindung sind Polymermischungen aus

a) 10 - 90 Gew.-% eines aromatischen Polycarbonats, dessen lineare Ketten zu mindestens 80 Gew.-% aus wiederkehrenden Struktureinheiten der Formel (1)

(1) 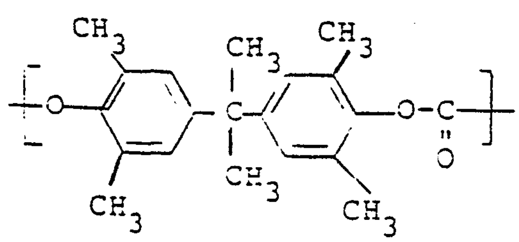

und zu höchstens 20 Gew.-% aus wiederkehrenden Einheiten der Formel (2) bestehen,

(2) 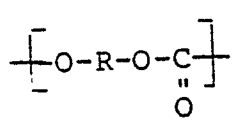

in der -O-R-O- einen Diphenol-Rest, abgeleitet von anderen Bis-(hydroxyphenyl)-alkanen, die auch

kernalkyliert oder kernhalogeniert sein können, bedeutet,

b) 90 - 10 Gew.-% eines Styrol-Acrylnitril-Copolymeren und/oder

c) 90 - 10 Gew.-% eines Pfropfpolymerisates, bestehend aus 10-95 Gew.-% eines Styrol-Acrylnitril-Copolymeren und 90-5 Gew.-% eines Butadienkautschuks mit 0-50 Gew.-% an Comonomeren neben Butadien, eines Ethylen-Propylen-Dien-Kautschuks oder eines Kautschuks aus Acrylaten mit 0-30 Gew.-% anderer Comonomerer, hergestellt durch Polymerisation von Styrol-Acrylnitril-Gemischen in Gegenwart eines der genannten Kautschuke,

wobei die Summe der Gew.-% aus a) + b) + c) jeweils 100 Gew.-% ist,

dadurch gekennzeichnet, daß der Acrylnitrilanteil im Styrol-Acrynitril-Copolymeren in b) und in c) 6 bis 15 Gew.-% beträgt.

Das unter a) genannte Polycarbonat, das in den Polymermischungen dieser Erfindung eingesetzt wird, ist entweder ein Copolycarbonat mit mindestens 80 Gew.-% aus wiederkehrenden Struktureinheiten der Formel (1) und höchstens 20 Gew.-% aus wiederkehrenden Struktureinheiten der Formel (2) oder ein Polycarbonat nur aus wiederkehrenden Struktureinheiten der Formel (1). Während den Struktureinheiten der Formel (1) das 2,2-Bis-(3,5-dimethyl-4-hydroxy-phenyl)-propan zugrundeliegt, können den Struktureinheiten der Formel (2) als Diphenole andere Bis-(hydroxyphenyl)-alkane sowie deren kernalkylierte und kernhalogenierte Verbindungen zugrunde liegen. Derartige Diphenole sind z.B. in den US-Patentschriften Nr. 3 028 365, 2 999 835, 3 148 172, 2 991 273, 3 271 367, 2 999 846, in den Deutschen Offenlegungsschriften 2 063 050, 2 211 957, 1 570 703, 2 329 585, 2 329 646, in der Monographie Hermann Schnell, Chemistry and Physics of Polycarbonates, Polymer Reviews, Volume 9, Interscience Publishers New York, 1964, und anderen Stellen beschrieben.

Bevorzugte Polycarbonate sind Copolycarbonate, in denen den wiederkehrenden Einheiten der Formel (2) kernalkylierte Dihydroxyverbindungen zugrunde liegen. Von diesen Copolycarbonaten sind wiederum solche bevorzugt, in denen diese kernalkylierten Dihydroxyverbindungen in o-Stellung zu den phenolischen OH-Gruppen alkyliert sind. Von den o-alkylsubstituierten sind die 2-3-fach und besonders die 4-fach o-alkylsubstituierten Dihydroxyverbindungen bevorzugt. Bevorzugte Alkylgruppen sind die Methylgruppen. Einige Beispiele solcher bevorzugter Dihydroxyverbindungen sind die folgenden:

2,2-Bis-(3-methyl-4-hydroxyphenyl)-propan,
2-(3-Methyl-4-hydroxyphenyl)-2-(3,5-dimethyl-4-hydroxyphenyl)-propan,
Bis-(3,5-dimethyl-4-hydroxyphenyl)-methan,
1,1-Bis-(3,5-dimethyl-4-hydroxyphenyl)-ethan,

2,2-Bis-(3,5-dimethyl-4-hydroxyphenyl)-butan
2,4-Bis-(3,5-dimethyl-4-hydroxyphenyl)-2-methylbutan.

Besonders bevorzugte Polycarbonate sind solche, denen Rohbisphenole zugrunde liegen, wie sie aus reinem 2,6-Dimethylphenol und aus insbesondere mit Kresolen verunreinigten technischen 2,6-Dimethylphenolen nach den Verfahren der DOS 2 928 464 (Le A 19 525) und der DOS 2 928 443 (Le A 19 623) hergestellt werden können. Voraussetzung ist erfindungsgemäß, daß auch bei diesen besonders bevorzugten Polycarbonaten mindestens 80 % der wiederkehrenden Struktureinheiten der Formel (1) genügen.

Bevorzugt sind von den Copolycarbonaten mit mindestens 80 Gew.-% aus wiederkehrenden Struktureinheiten der Formel (1) die mit mindestens 90 Gew.-% aus wiederkehrenden Struktureinheiten der Formel (1). Ganz besonders bevorzugt sind die Polycarbonate nur aus wiederkehrenden Struktureinheiten der Formel (1).

Die Herstellung der für die Polymermischung der Erfindung einsetzbaren Polycarbonate erfolgt nach bekannten Verfahren, wie sie beispielsweise in den Deutschen Offenlegungsschriften 2 063 050, 2 211 957, 2 901 665 und 2 901 668 beschrieben sind. Sie besitzen Molekulargewichte $\bar{M}_w$ (Gewichtsmittel) von 10 000 - 200 000, bevorzugt von 20 000 - 80 000, besonders bevorzugt von 25 000 - 60 000 und ganz besonders bevorzugt von 30 000 - 45 000.

Für die Einstellung der Molekulargewichte $\bar{M}_w$ der erfindungsgemäß einsetzbaren aromatischen Polycarbonate können Kettenabbrecher in den üblichen Mengen verwendet werden. Geeignete Kettenabbrecher sind beispielsweise Phenole, wie Phenol, o-, m-, p-Kresol, 2,6-Dimethylphenol, p-tertiär-Butylphenol.

Die erfindungsgemäß einsetzbaren Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxygruppen verzweigt sein.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxy-phenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-[4-(hydroxyphenylisopropyl)-phenyl]-ortho-terephthalsäureester, Tetra-(4-hydroxyphenyl)-methan, Tetra-[4-(4-hydroxyphenylisopropyl)-phenoxy]-methan und 1,4-Bis-[(4',4"-dihydroxytriphenyl)-methyl]-benzol. Einige der sonstigen dreifunktionellen Verbindungen sind 2,4-Dihydroxybenzoesäure, Trimesinsäure, Cyanurchlorid, 3,3-Bis-(4-hydroxy-

phenyl)-2-oxo-2,3-dihydroindol und 3,3-Bis-(3-methyl-4-hydroxyphenyl)-2-oxo-2,3-dihydroindol.

Die Herstellung von verzweigten Polycarbonaten dieser Art ist z.B. in den Deutschen Offenlegungsschriften 1 570 533, 1 596 762, 2 116 974, 2 113 347, den britischen Patentschriften 1 079 821 und 1 476 108 sowie der US-Patentschrift 3 544 514 beschrieben.

Das unter b) genannte Styrol-Acrylnitril-Copolymere, das in den Polymermischungen dieser Erfindung eingesetzt wird, ist ein durch Copolymerisation von Styrol und Acrylnitril herstellbares Copolymeres mit 6 - 15 Gew.-% eingebautem Acrylnitril. Die Copolymerisation kann radikalisch erfolgen. Bevorzugte Styrol-Acrylnitril-Copolymere enthalten 7 - 13 Gew.-% Acrylnitril, besonders bevorzugte 7-10 Gew.-% Acrylnitril.

Die Molekulargewichte dieser Styrol-Acrylnitril-Copolymeren können in weiten Bereichen variiert werden.

Üblicherweise sollen die Molekulargewichte, ausgedrückt als Gewichtsmittel, im Bereich von 30 000 - 600 000 liegen. Die molekulare Uneinheitlichkeit der Styrol-Acrylnitril-Copolymeren, ausgedrückt durch den Wert

$$\frac{\bar{M}_w}{\bar{M}_n} - 1 = U_n,$$

ist unkritisch. Sie liegt normalerweise im Bereich von

$U_n$ = 0,5 bis 3,5 und ist durch den Herstellprozeß und die Herstellungsbedingungen variierbar.

Die Styrol-Acrylnitril-Copolymeren lassen sich prinzipiell nach bekannten Verfahren herstellen, wie z.B. durch Masse-, Lösungs-, Suspensions- oder Emulsionscopolymerisation, wobei allerdings Verfahrensbedingungen eingehalten werden müssen, die zur Copolymerisation der Monomeren Styrol und Acrylnitril unter Bildung von Styrol-Acrylnitril-Copolymeren mit 6 - 15 Gew.-% an eingebautem Acrylnitril notwendig sind. Bevorzugte Herstellverfahren sind die der Emulsions-, der Lösungs- und der Massecopolymerisation. Neben diskontinuierlicher Durchführung der Copolymerisation kann diese auch kontinuierlich durchgeführt werden. Die kontinuierliche Reaktionsführung ist besonders vorteilhaft.

Die erfindungsgemäß geeigneten Styrol-Acrylnitril-Copolymeren besitzen im allgemeinen einen linearen, unvernetzten Aufbau. Zur Herstellung der erfindungsgemäßen Polymermischungen lassen sich aber auch Styrol-Acrylnitril-Copolymere mit einem verzweigten Aufbau verwenden.

Das unter c) genannte Pfropfpolymerisat, das in den Polymermischungen dieser Erfindung eingesetzt wird, ist ein Pfropfpolymerisat, bestehend aus 10-95 Gew.-% eines Styrol-Acrylnitril-Copolymeren und 90-5 Gew.-% eines Kautschuks. Das Styrol-Acrylnitril-Copolymere enthält 6 - 15 Gew.-% Acrylnitril, bevorzugt 7 - 13 Gew.-% Acrylnitril, und insbesondere 7-10 Gew.-% Acrylnitril eingebaut. Das Pfropfpolymerisat wird bevorzugt durch radikalische Copolymerisation der Pfropfmonomeren Styrol und Acrylnitril in Anwesenheit des Kautschuks, der die Pfropfbasis darstellt, erhalten. Der Kautschuk, der als Propfbasis dient, kann ein Butadien-Kautschuk sein, hergestellt aus Butadien mit bis zu 50 Gew.-% an Comonomeren. Bevorzugte Kautschuke dieser Art sind Butadien-Styrol- und Butadien-Acrylnitril-Copolymere sowie insbesondere Polybutadien. Weiterhin als Pfropfbasis einsetzbare Kautschuke sind kautschukartige Acrylester-Copolymere sowie EPDM-Terpolymere.

Die Pfropfpolymerisation der Monomeren Styrol und Acrylnitril auf den Kautschuk ist nach bekannten Verfahren so durchzuführen, daß die Harzkomponente der Pfropfpolymerisate das gewünschte Styrol/Acrylnitril-Verhältnis, im Rahmen der erfindungsgemäßen Verhältnisse Styrol zu Acrylnitril, aufweist. Bevorzugte Pfropfpolymerisate enthalten 65-90 Gew.-% Kautschuk und 35-10 Gew.-% Styrol-Acrylnitril-Copolymer. Ebenfalls bevorzugte Pfropfpolymerisate enthalten 15-50 Gew.-% Kautschuk und 85-50 Gew.-% Styrol-Acrylnitril-Copolymer.

Die Herstellung der erfindungsgemäß einsetzbaren Pfropfpolymerisate ist bekannt. So kann man die Pfropfmonomeren in Gegenwart eines Latex der Pfropfbasis in Emulsion mit radikalischen Initiatoren polymerisieren. Ist die Pfropfbasis unvernetzt und werden bestimmte Pfropfmonomer-Pfropfbasis-Verhältnisse eingehalten, so ist die Teilchengröße des Latex der Pfropfbasis auch bestimmend für

die Größe des Pfropfkautschukteilchens. Die Pfropfhülle besteht aus chemisch an die Kautschukteilchen gebundenen Ketten des Polymerisats der Pfropfmonomeren. Die Pfropfreaktion ist unvollständig. Neben dem eigentlichen Pfropfkautschukteilchen entsteht auch das nicht gepfropfte Copolymere der Pfropfmonomeren. Beides zusammen wird in dieser Anmeldung als Pfropfpolymerisat bezeichnet. Man kann Pfropfpolymerisate auch durch Masse-Lösungs- oder Masse-Suspensions-Polymerisation herstellen, wenn man von einem monomerlöslichen Kautschuk ausgeht. Die Größe der Pfropfkautschukteilchen wird dann durch die Phaseninversion festgelegt und kann sowohl mechanisch durch Rühren als auch durch chemische Beeinflussung des Phasengleichgewichts (Zusatz von Dispergatoren) variiert werden. Im allgemeinen werden so Teilchen $\geq 1$ µm erhalten.

Man kann Pfropfpolymerisate verwenden, deren Pfropfkautschukteilchen einen Durchmesser von 0,05-10 µm haben, wobei ein erheblicher Teil der Pfropfmonomeren im Inneren des Pfropfkautschukteilchens als Copolymerisat includiert sein kann. Bevorzugt sind Teilchendurchmesser von 0,05 bis 1,2 µm bzw. 0,05-0,6 µm. Es ist auch möglich, mehrere voneinander verschiedene Pfropfpolymerisate nebeneinander einzusetzen, die sich zum Beispiel durch den Pfropfgrad, die Pfropfdichte und die Pfropfkautschukteilchengröße unterscheiden können. Besonders geeignet ist beispielsweise ein Gemisch aus einem Pfropfpolymerisat mit Pfropfkautschukteilchen eines $d_{50}$-Wertes von 0,35 bis 10 µm und einem Pfropfpolymerisat mit Pfropfkautschukteilchen eines mittleren Teilchendurchmessers $d_{50}$

von 0,05 - 0,32 µm, d.h. ein sogenanntes Bimodal-System. Unter Teilchendurchmesser $d_{50}$ wird der mittlere Durchmesser verstanden, oberhalb dessen und unterhalb dessen die Durchmesser von jeweils 50 % der Teilchen liegen.

Besonders bevorzugt werden die folgenden Polymermischungen dieser Erfindung:

1. Polymermischung aus 70-90 Gew.-% eines unter a) aufgeführten Polycarbonats mit 30-10 Gew.-% eines unter c) aufgeführten Pfropfpolymerisates, das 65 - 90 Gew.-% Kautschuk und 35-10 Gew.-% Styrol-Acrylnitril-Copolymer enthält.

2. Polymermischung eines unter a) aufgeführten Polycarbonats, eines unter b) aufgeführten Styrol-Acrylnitril-Copolymeren und eines unter c) aufgeführten Pfropfpolymerisats, in der a) und b) jeweils mindestens 10 Gew.-%, a) und b) zusammen 65-90 Gew.-% und c) 10-35 Gew.-% betragen, und in der c) aus 65-90 Gew.-% Kautschuk und 35-10 Gew.-% Styrol-Acrylnitril-Copolymerisat besteht.

3. Polymermischung aus 10-60 Gew.-% eines unter a) aufgeführten Polycarbonats und 90-40 Gew.-% eines unter b) aufgeführten Styrol-Acrylnitril-Copolymeren.

4. Polymermischung aus 20-60 Gew.-% eines unter a) aufgeführten Polycarbonats und 80-40 Gew.-% eines

unter b) aufgeführten Pfropfpolymerisats, dessen Anteil an Kautschuk 15-50 Gew.-% und an Styrol-Acrylnitril-Copolymerem 85-50 Gew.-% beträgt.

Abmischungen von den in Rede stehenden Polycarbonaten aus tetraalkylierten Bisphenolen mit handelsüblichen Styrol-Acrylnitril-Copolymerisaten, deren Styrol-Acrylnitril-Verhältnis bei etwa 75 : 25 in bekannter Weise liegt, zeigen zwar eine gewisse Verträglichkeit, bilden jedoch bei Raumtemperatur und auch im Zustand der Schmelze getrennte Phasen.

Analoges gilt für Abmischungen dieser Polycarbonate mit entsprechenden Styrol-Acrylnitril-Pfropfpolymerisaten auf Kautschuke, deren Styrol-Acrylnitril-Verhältnis ebenfalls, wie oben dargelegt, bei etwa 75 : 25 liegt (siehe auch G. Humme, H. Röhr und V. Serini, Angew. Makrom. Chem. 58/59 (1977), 85-94).

Demgegenüber verhalten sich Abmischungen aus den in Rede stehenden Polycarbonaten aus tetraalkylierten Bisphenolen mit Polystyrolen völlig anders, da sie bei Temperaturen bis zu ca. 240°C in allen Gewichtsverhältnissen einphasige Mischungen bilden, die sich jedoch oberhalb dieser Temperatur in zwei Phasen entmischen (R. Casper, L. Morbitzer, Angew. Makrom. Chem. 58/59 (1977) 1-35).

Dies ist für die thermoplastische Verarbeitung ein Nachteil, da diese auch oberhalb dieser Entmischungstemperaturen erfolgt und die spätere Abkühlung für eine Rückbildung des stabilen einphasigen Zustandes zu schnell erfolgt.

Es wurde nun überraschend gefunden, daß Styrol-Copolymerisate mit geringen Acrylnitrilgehalten bis maximal 15 Gew.-%, die üblicherweise in der Praxis bislang nicht benutzt wurden, da im allgemeinen Styrol-Acrylnitril-Verhältnisse von etwa 75 : 25 üblich sind, in Abmischung mit den in Rede stehenden Polycarbonaten aus tetraalkylierten Bisphenolen Einphasigkeit ergeben, die auch bei Verarbeitungstemperaturen von über 240°C, wo sich die vorerwähnten Polycarbonat-Polystyrol-Abmischungen entmischen, bestehen bleibt. Somit sind derartige Abmischungen für die Verarbeitung und bezüglich der Abkühlung der verarbeiteten bzw. verformten Gemische technisch äußerst günstig.

Es war keinesfalls zu erwarten, daß beim Übergang von reinem Polystyrol zu Styrol-Acrylnitrilcopolymerisaten geringe Mengen an einpolymerisiertem Acrylnitril bis zu maximal 15 Gew.-%, bezogen auf die Summe Styrol + Acrylnitril, eine derartige Wirkung haben, da ja die Abmischungen mit den in der Praxis üblichen Styrol-Acrylnitril-Copolymerisaten, deren Styrol-Acrylnitril-Verhältnis etwa 75 : 25 beträgt, genau den gegenteiligen Zustand, nämlich Entmischung bewirken.

Es wurde nun gefunden, daß optimale Verträglichkeit (Einphasigkeit) zwischen Styrol-Acrylnitril-Copolymerisaten und Polycarbonaten der genannten Art dann erreicht wird,

wenn Styrol-Acrylnitril-Copolymere der Zusammensetzung 94:6 bis 85:15 Verwendung finden, besonders bevorzugt sind hierbei Copolymerisate mit einem Styrol/Acrylnitril-Gew.-Verhältnis von 93:7 bis 87:13, insbesondere aber mit einem Gew.-Verhältnis von 93:7 bis 90:10. Bei Anwendung einer Tg-Messung (als Meßgerät findet ein "Perkin-Elmer-DSG 2" Verwendung) wird festgestellt, daß im vorgenannten Vorzugsbereich völlige Einphasigkeit mit Sicherheit besteht.

Diese Bedingungen gelten auch dann, wenn ein Pfropfprodukt, bestehend aus Polybutadien und Styrol-Acrylnitril-Polymerisat, anstelle des Copolymerisates Verwendung findet".

Gemäß DE-OS 2 329 585 (Le A 15 024) und DE-OS 2 329 646 (Le A 15 108) sind Mischungen aus Polycarbonaten der genannten Art mit Styrol-Acrylnitril-Copolymerisaten bzw. Styrol-Acrylnitril-Pfropfpolymerisaten beschrieben. Die Styrol-Acrylnitril-Verhältnisse sind dort zwischen 95 : 5 und 30 : 70 aufgeführt. In den Ausführungsbeispielen der beiden Offenlegungsschriften wurden jedoch nur Styrol-Acrylnitril-Verhältnisse von etwa 80 bis 72 zu 20 bis 28 gewählt.

Der Gegenstand der vorliegenden Erfindung ist daher durch diese beiden Offenlegungsschriften weder vorweggenommen, noch nahegelegt.

Die erfindungsgemäßen einphasigen Abmischungen der Polycarbonate mit Styrol-Acrylnitril-Copolymerisaten, also

die ohne Kautschukanteil, sind auch nach Verarbeitung und Formgebung über die Schmelze transparent, da sie auch bei hohen Temperaturen (bis über 300°C) nicht entmischen.

Weiterhin zeigen die erfindungsgemäßen Polymermischungen vergleichsweise niedrige Schmelzviskositäten, insbesondere bei höheren Polycarbonatgehalten.

Besonders günstig sind auch die mechanischen Eigenschaften der Polymermischungen dieser Erfindung. So zeigen sie beispielsweise höhere Schlag- und Kerbschlagzähigkeit, höhere Härte und E-Moduli, höhere Wärmestandfestigkeit, höhere Zusammenfließnahtfestigkeit, ein besseres Tieftemperaturbruchverhalten, ein besseres biaxiales Bruchverhalten und insbesondere ein besseres Wechseltemperaturverhalten als die bisher bekannten Mischungen aus 2,2-Bis-(3,5-dimethyl-4-hydroxyphenyl)-propan-Polycarbonat und Polystyrol beziehungsweise Pfropfpolymerisaten aus Polystyrol und Kautschuken. Vorteilhaft ist auch die besonders geringe Streuung der Größe der gemessenen Eigenschaften der einzelnen Prüfkörper, z.B. bei der Messung der Kerbschlagzähigkeit oder der Schlagzähigkeit. Dies bedeutet für die Technik, daß große Formteile ohne materialbedingte Schwachstellen erhalten werden können und daß bei der Serienfertigung von Formteilen eine besonders gleichmäßige Qualität gewährleistet ist. Günstig ist weiterhin die gute Lösemittelbeständigkeit und die geringe Spannungsrißneigung der erfindungsgemäßen Polymermischungen.

Außerordentlich günstig ist der Ausdehnungskoeffizient der erfindungsgemäßen Polymermischungen, insbesondere

auch bei hohem Polycarbonatanteil. Weiterhin ist die hervorragende Oberflächengüte der Polymerlegierungen der Erfindung hervorzuheben. Vorteilhaft ist auch eine besonders gute Haftung der erfindungsgemäßen Legierungen an Polyurethanen.

Von den Kautschuk enthaltenden Legierungen dieser Erfindung besitzen die mit Butadienkautschuk ein besonders günstiges Tieftemperaturbruchverhalten, während die mit Ethylen-Propylen-Dien-Kautschuk und insbesondere mit Acrylat-Kautschuk hervorragende Witterungsstabilität aufweisen.

Alle Polymermischungen dieser Erfindung weisen eine hohe Hydrolysebeständigkeit, insbesondere auch bei hohen Temperaturen, auf. Hervorragend hydrolysestabil sind insbesondere auch die glasfaserverstärkten Legierungen dieser Erfindung.

Die Polymermischungen dieser Erfindung können aus den einzelnen Polymeren auf bekannte Weise hergestellt werden, so beispielsweise über die Schmelze auf Mischextrudern, auf Knetern oder auf Walzen. Sie können auch über die Lösung der Polymeren in organischen Lösungsmitteln und anschließendes Ausfällen und Trocknen gewonnen werden. Ebenso ist es möglich, sie aus Mischungen, die über die Lösung erfolgt sind, durch Abdampfen des Lösungsmittels zu isolieren, z.B. in Eindampfextrudern.

Die Polymermischungen der Erfindung sind besonders geeignet für Anwendungen, bei denen ständiger Kontakt mit

heißen wäßrigen Lösungen oder heißem Wasser zu erwarten ist, so z.B. für Waschmaschinen, Heißwasserkocher, Geschirr. Sie eignen sich weiterhin hervorragend im Automobilsektor, wo günstiges Bruchverhalten auch unter Extrembedingungen erforderlich ist, so z.B. für Armaturenbretter und Innenverkleidungen. Für Innenverkleidungen ist die gute Aufschäumbarkeit und Haftung von Polyurethanschäumen auf den Polymermischungen dieser Erfindung besonders vorteilhaft.

Wegen der hohen Oberflächengüte und des geringen Ausdehnungskoeffizienten sind die Mischungen geeignet für Scheinwerferreflektoren.

Die Polymermischungen dieser Erfindung können durch Zusätze modifiziert werden, wie bei Polymeren üblich. So können sie z.B. Verstärkungsmittel, wie Kohlenstoff-Fasern, Glasfasern und Mineralfasern (z.B. Asbest, Talcum und Glimmer, sowie Füllstoffe, z.B. gemahlene Mineralien, Stabilisatoren und Farbstoffe) enthalten.

Ein weiterer Gegenstand der Erfindung ist ein Verfahren zur Herstellung der erfindungsgemäßen Polymermischungen bestehend aus einer thermoplastischen Phase und gegebenenfalls einer Kautschukphase, dadurch gekennzeichnet, daß man

a) 10 - 90 Gew.-% der erfindungsgemäß einzusetzenden Polycarbonate, mit

b) 90 - 10 Gew.-% der erfindungsgemäß einzusetzenden Styrol-Acrylnitril-Copolymeren und/oder mit

c) 90 - 10 Gew.-% der erfindungsgemäß einzusetzenden Pfropfpolymerisate

bei Temperaturen von 255°C bis 340°C auf Extrudern oder Knetern vermischt, wobei die Summe der Gew.-% aus a) + b) + c) jeweils 100 Gew.-% beträgt.

Ein weiterer Gegenstand ist ein Verfahren zur Weiterverarbeitung der erfindungsgemäßen Polymermischungen, die aus einer thermoplastischen Phase und gegebenenfalls einer Kautschukphase bestehen, und die aus

a) 10 - 90 Gew.-% der erfindungsgemäß einzusetzen Polycarbonate,

b) 90 - 10 Gew.-% der erfindungsgemäß einzusetzenden Styrol-Acrylnitril-Copolymeren und/oder

c) 90 - 10 Gew.-% der erfindungsgemäß einzusetzenden Pfropfpolymerisate bestehen, wobei die Summe der Gew.-% aus a) + b) + c) jeweils 100 Gew.-% beträgt,

zu Formkörpern, dadurch gekennzeichnet, daß man die Polymermischungen bei Temperaturen von 265 °C bis 340 °C auf Extrudern, Spritzgießmaschinen oder Hochtemperaturpressen verformt.

Beispiel 1: Polycarbonate

In den folgenden Beispielen werden für die Herstellung der Polymermischungen folgende Polycarbonate eingesetzt:

a) M P C
Polycarbonat aus 2,2-Bis-(3,5-dimethyl-4-hydroxyphenyl)-propan, $\eta_{rel}$ = 1,294 (in $CH_2Cl_2$ bei 25°C c = 5 g/l), Glasübergangstemperatur $T_g$ = 203°C aus Differentialthermoanalyse.

b) M P C - R O H
Polycarbonat aus einem Rohbisphenol mit 95 Gew.-% 2,2-Bis-(3,5-dimethyl-4-hydroxyphenyl)-propan, unter 0,1 Gew.-% 2,6-Dimethylphenol und 4,9 Gew.-% unbekannten Komponenten (Rohbisphenol erhalten nach der DOS 2 928 464, Bsp. 1), $\eta_{rel}$ = 1,297 in $CH_2Cl_2$ bei 25°C, c = 5 g/l, Glasübergangstemperatur $T_g$ = 202°C.

c) TMBPA/TMBPB-CPC 85/15
Copolycarbonat aus 2,2-Bis-(3,5-dimethyl-4-hydroxyphenyl)-propan und 2,2-Bis-(3,5-dimethyl-4-hydroxyphenyl)-butan, bestehend aus 85 Gew.-% Polycarbonateinheiten aus ersterem und 15 Gew.-% Polycarbonateinheiten aus letzterem Bisphenol, $\eta_{rel}$ = 1,305 in $CH_2Cl_2$ bei 25°C, c = 5g/l, Glasübergangstemperatur $T_g$ = 201°C.

d) TMBPA/BPA-CPC 92/8
Copolycarbonat aus 2,2-Bis-(3,5-dimethyl-4-hydroxy-

phenyl)-propan und 2,2-Bis-(4-hydroxyphenyl)-propan, bestehend aus 92 Gew.-% Polycarbonateinheiten aus ersterem und 8 Gew.-% Polycarbonateinheiten aus letzterem Bisphenol, $\eta_{rel}$ = 1,295 in $CH_2Cl_2$ bei 25°C, c = 5 g/l, Glasübergangstemperatur $T_g$ = 197°C.

e) P C
Polycarbonat aus 2,2-Bis-(4-hydroxyphenyl)-propan, $\eta_{rel}$ = 1,292 in $CH_2Cl_2$ bei 25°C, c = 5 g/l, Glasübergangstemperatur $T_g$ = 149°C.

Beispiel 2. Styrol-Acrylnitril-Copolymere (SAN)

Durch Emulsions- und durch Massepolymerisation wurden die in der Tabelle Beispiel 2 aufgeführten Styrol-Acrylnitril-Copolymeren erhalten. Die Stabilisierung der Emulsions- und Massepolymeren mit einem Antioxidants erfolgte, wie in Beispiel 3 beschrieben.

Tabelle Bsp. 2: Styrol-Acrylnitril-Copolymere

E = Emulsionspolymerisation; M = Massepolymerisation;
AN = Acrylnitrilgehalt des Styrol-Acrylnitril-Copolymeren, ermittelt durch N-Analyse des Copolymeren;
$\eta_{\frac{spez.}{c}}$ bei c = 5 g/l in Methylethylketon bei 25°C;

$U_n = \frac{\bar{M}_w}{\bar{M}_n} - 1$, $\bar{M}_w$ = Gewichtsmittel des Molekulargewichts,
$\bar{M}_n$ = Zahlenmittel des Molekulargewichts

| Bsp. 2 | Polymerisationsverfahren | AN (Gew.-%) | Viskosität $\frac{\text{spez.}}{c}$ | $U_n$ |
|---|---|---|---|---|
| a | E | 23,2 | 86 | 2,1 |
| b | " | 21,0 | 87 | 2,1 |
| c | " | 17,9 | 83 | 2,3 |
| d | " | 16,2 | 82 | 2,1 |
| e | " | 14,2 | 83 | 2,3 |
| f | " | 12,8 | 81 | 2,2 |
| g | " | 11,5 | 80 | 2,0 |
| h | " | 8,5 | 85 | 2,0 |
| i | " | 0 | 88 | 2,0 |
| j | M | 17,0 | 64 | 1,0 |
| k | " | 10,2 | 66 | 1,1 |
| l | " | 0 | 67 | 1,2 |

Beispiel 3: Pfropfpolymerisate

Durch Emulsionspolymerisation wurden die in der Tabelle aufgeführten Pfropfpolymerisate erhalten. Vor der Mischung mit den Polycarbonaten wurden die Pfropfpolymerisate auf folgende Weise stabilisiert: Die Pfropfpolymmerisatlatices wurden vor ihrer Koagulation mittels einer Stabilisatordispersion - die pro 100 Gew.-Teile Polymer 0,25 - 1,5 Gew.-Teile eines phenolischen Antioxidants enthielt - stabilisiert und anschließend durch Elektrolyt - und Säurezusätze ausgefällt. Die sedimentierten Pulver wurden bei 70-80 °C getrocknet.

Die durch Emulsionspolymerisation erhaltenen SAN- und PST-Polymeren der anderen Beispiele wurden ebenso stabilisiert, wie oben beschrieben.

Bei den durch Masse und Lösungspolymerisation erhaltenen SAN- und PST-Polymeren sowie Styrol- und Styrol-Acrylnitril-Pfropfpolymerisaten der anderen Beispiele wurde die entsprechende Antioxidantsmenge durch Schmelzcompoundierung eingearbeitet.

Tabelle Beispiel 3: Pfropfpolymerisate

| Bsp. 3 | Pfropfgrundlage hochvernetzt | | Verhältnis Pfropfmonomere Styrol/AN (Gew.Tle.) | Art der Polymerisation | Pfropfpolymerisat Pfropfkautschuk-Teilchendurchmesser $d_{50}$ (µm)[1)] | G-Wert[2)] |
|---|---|---|---|---|---|---|
| | Art | % des Pfropfpolymerisats | | | | |
| a | PB | 35 | 100/0 | E | 0,4 | 0,55 |
| b | " | " | 92/8 | " | 0,4 | 0,59 |
| c | " | " | 87/13 | " | 0,4 | 0,57 |
| d | BS | " | 92/8 | " | 0,5 | 0,61 |
| e | PB | 35 | 72/28 | " | 0,4 | 0,56 |
| f | " | 70 | 100/0 | " | 0,4 | 0,58 |

1) = Ultrazentifugen-Messungen, vgl. W. Scholtan, H. Lange, Kolloidz. und Z. Polymere 250 (1172) S. 783-796 bzw. G. Kämpf, H. Schuster, Angew. Makromol. Chemie 14 (1170) 111-129

1) = Pfropfgrad G (G-Wert) bezeichnet das Verhältnis $\frac{\text{Styrol/Acrylnitril-gepfropft}}{\text{Pfropfgrundlage}}$

E = Emulsionspolymerisation; L = Lösungspolymerisation; PB = Polybutadien; BS = Butadien-Styrol-Kautschuk aus 75 % Butadien und 25 % Styrol; BA = Polybutylacrylat, vernetzt mit Allylacrylat;

Tabelle Beispiel 3 (Fortsetzung)

| Bsp. 3 | Pfropfgrundlage hochvernetzt | | Verhältnis Pfropfmonomere Styrol/AN (Gew.Tle.) | Art der Polymerisation | Pfropfpolymerisat Pfropfkautschuk-Teilchendurchmesser $d_{50}$ (µm) | G-Wert[2)] |
|---|---|---|---|---|---|---|
| | Art | % des Pfropfpolymerisats | | | | |
| g | PB | 70 | 92/8 | E | 0,4 | 0,61 |
| h | " | " | 72/28 | " | 0,4 | 0,63 |
| i | BA | 35 | 100/0 | " | 0,45 | 0,59 |
| j | " | " | 91/9 | " | 0,45 | 0,62 |
| k | EP | " | 100/0 | L | 1,0 | 0,51 |
| l | " | " | 91/9 | L | 1,0 | 0,53 |

Beispiel 4: Mischungen aus MPC und SAN, SAN hergestellt durch Emulsionspolymerisation

35 g Polystyrol bzw. SAN werden bei 200 - 220°C in einem Glaskolben aufgeschmolzen, der mit Rührer und $N_2$-Einleitung ausgerüstet ist. Nach dem Aufschmelzen des Polystyrols bzw. SAN werden 35 g MPC aus Bsp. 1 a zu der Schmelze gegeben und unter Erhöhung der Temperatur auf 300°C ebenfalls aufgeschmolzen. Durch Rühren wird dann bei 300°C die Schmelze der Polymeren homogenisiert. Nach dem Homogenisieren der Schmelze wird diese unter Erstarren bis auf Raumtemperatur (ca. 25°C) abgekühlt. Der gesamte Aufschmelz-, Homogenisier- und Abkühlvorgang wird unter $N_2$ durchgeführt.

Auf die beschriebene Weise wurde eine Reihe von Polymermischungen hergestellt und durch Differentialthermoanalyse untersucht, wie es aus Tabelle Bsp. 4 hervorgeht. Die Ergebnisse sind ebenfalls in Tabelle Bsp. 4 aufgeführt. Es zeigt sich, daß die erfindungsgemäßen Formmassen e-h einphasig und transparent sind, obwohl die Schmelze bis 300°C erhitzt wurde, während die nicht erfindungsgemäßen Formmassen (zu hoher AN-Gehalt im SAN) zweiphasig und undurchsichtig bzw. opak sind. Die Phasigkeit wird aus dem Ergebnis der Differenthialthermoanalyse entnommen. Bei Auftreten nur einer Glastemperatur herrscht Einphasigkeit, was durch die Transparenz der Mischungen bestätigt wird (s. Bsp. 4 e-h). Bei Auftreten von zwei Glastemperaturen herrscht Zweiphasigkeit, was durch die Undurchsichtigkeit der Mischungen bestätigt wird (s. Bsp. 4a-d und i).

Tabelle Bsp. 4: Mischungen von MPC mit Emulsions-SAN 1/1 Gewichtsteile

AN = Acrylnitrilgehalt des SAN aus N-Analyse

t = transparent; u = undurchsichtig

Mischungsherstellung über die Schmelze bei 300°C

$\eta_{rel}$ in $CH_2Cl_2$, 0,5 g Polymer/l; $T_g$ = Glastemperatur aus Differentialthermoanalyse; * = Polystyrol

| Bsp. | SAN | | MPC/SAN 1/1 | |
|---|---|---|---|---|
| 4 | aus Bsp. 2 | AN | $T_g$ (°C) | Aussehen der erstarrten Schmelze |
| a | a | 23,2 | 113/188 | u |
| b | b | 21,0 | 112/182 | u |
| c | c | 17,9 | 113/180 | u |
| d | d | 16,2 | 116/172 | u |
| e | e | 14,2 | 141 | t |
| f | f | 12,8 | 140 | t |
| g | g | 11,5 | 139 | t |
| h | h | 8,5 | 141 | t |
| i | i | *0 | 117/177 | u |

Beispiel 5: Mischungen aus MPC und SAN, SAN hergestellt durch Massepolymerisation

Wie in Beispiel 4 beschrieben, wurden Mischungen aus MPC und SAN hergestellt, wobei als SAN jedoch nur Copolymere eingesetzt wurden, die nach dem Verfahren der Massepolymerisation erhalten wurden. Das Ergebnis (s. Tabelle Bsp. 5) entspricht demjenigen von Beispiel 4 (vgl. Tabelle Bsp. 4).

Tabelle Bsp. 5: Mischungen von MPC mit Masse-SAN 1/1 Gew.T

Erklärungen s. Tabelle Bsp. 2

| Bsp. | SAN | | MPC/SAN 1/1 | |
|---|---|---|---|---|
| 5 | aus Bsp. 2 | AN (Gew.-%) | $T_g$ (°C) | Aussehen der erstarrten Schmelze |
| a | j | 17 | 115/180 | u |
| b | k | 10 | 142 | t |
| c | f | 6 | 139 | t |
| d | l | 0 | 116/179 | u |

Beispiel 6: Mischungen aus Copolycarbonaten und Emulsions-SAN

Wie in Beispiel 4 beschrieben, wurden Mischungen aus Polycarbonaten und Emulsions-SAN hergestellt, wobei als Polycarbonate jedoch Copolycarbonate eingesetzt wurden. Aus Tabelle Bsp. 4 geht hervor, daß auch Copolycarbonate, die neben 2,2-Bis-(3,5-dimethyl-4-hydroxyphenyl)-propan andere Bisphenole in kleinen Anteilen einkondensiert enthalten (bis zu 20 Gew.-% Carbonateinheiten, bezogen auf die gesamten Carbonateinheiten) mit den erfindungsgemäß einzusetzenden SAN-Polymerisaten bei höheren Schmelztemperaturen einphasig sind.

Tabelle Bsp. 6: Mischungen von Copolycarbonaten mit Emulsions-SAN 1/1 Gew.T

t = transparent
MPC-ROH aus Bsp. 1
TMBPA/BPA-CPC 92/8 aus Bsp. 1 d
TMBPA/TMBPB-CPC 85/15 aus Bsp. 1 c
$SAN^{8,5}$ = Emulsions-SAN des Bsp. 2 h

| Bsp. | Mischung $SAN^{8,5}$ mit Copolycarbonaten 1/1 Gew. T | Copolycarbonat/SAN 1/1 | |
|---|---|---|---|
| | | $T_g$ (°C) | Aussehen der erstarrten Schmelze |
| a | TMBPA/TMBPB-CPC 85/15 | 140 | t |
| b | TMBPA/BPA-CPC 92/8 | 137 | t |
| c | MPC-ROH | 141 | t |

Beispiel 7: Schlagzähigkeit von Mischungen aus Polycarbonaten und Polystyrol sowie SAN

Über einen Doppelwellenextruder wurden bei 270 °C Polycarbonate mit Polystyrol und mit SAN gemischt, wie es aus Tabelle Bsp. 7 hervorgeht. Die erhaltenen Granulate wurden sodann auf einer Spritzgießmaschine bei 290 °C zu Prüfkörpern verarbeitet. Die Ergebnisse der Prüfung der Schlagzähigkeit an diesen Prüfkörpern sind in Tabelle Beisp. 7 aufgeführt.

Es zeigt sich, daß die Prüfkörper aus den erfindungsgemäßen Polymermischungen (Bsp. 7b, c, d,) eine gegenüber bisher bekannten Mischungen (Bsp. 7a und e) beträchtlich erhöhte Schlagzähigkeit aufweisen. Außerdem sind die erfindungsgemäßen Mischungen transparent (Bsp 7b, c, d), während die anderen (Bsp. 7a und e) intransparent sind.

Tabelle Bsp. 7: Schlagzähigkeit von Mischungen aus Polycarbonaten und Polystyrol sowie SAN

MPC = Polycarbonat aus Beispiel 1a
MPC-ROH = Polycarbonat aus Beispiel 1 b
SAN = Styrol-Acrylnitril-Copolymere aus Beispiel 2
t = transparent; u = undurchsichtig; $a_n$ nach DIN 53 453
* = Polystyrol

| Bsp. 7 | SAN | | Poly-carbonat | Mischungsverhältnis (Gew.T.) | Eigenschaften der Prüfkörper | |
|---|---|---|---|---|---|---|
| | aus Bsp.2 | AN (Gew.%) | | | Aussehen | Schlagzähigkeit $a_n$ (kJ/m$^2$) |
| a | i | 0* | MPC | 1/1 | u | 13 |
| b | h | 8,5 | MPC | 1/1 | t | 24 |
| c | f | 12,8 | MPC | 1/1 | t | 21 |
| d | h | 8,5 | MPC-ROH | 1/1 | t | 23 |
| e | a | 23,2 | MPC | 1/1 | u | 12 |

Beispiel 8: Schlagzähigkeit von Mischungen aus MPC und verschiedenen Pfropfpolymerisaten auf Basis von Polybutadienkautschuk

Aus MPC und Pfropfpolymerisaten aus Basis von Polybutadienkautschuk wurden, wie in Beispiel 7 beschrieben, über die Schmelze Mischungen hergestellt und diese zu Prüfkörpern verarbeitet. Bei den Pfropfpolymerisaten handelt es sich um Emulsionspfropfpolymerisate (s. Bsp. 3). Es zeigt sich, daß die erfindungsgemäßen Mischungen (Bsp. 8b, c, d, g) eine beträchtlich bessere Kerbschlagzähigkeit aufweisen als bisher bekannte (Bsp. 8 a, e, f, h).

Tabelle Bsp. 8: Schlagzähigkeit von Mischungen aus MPC und Pfropfpolymerisaten auf Basis von Polybutadienkautschuken

* = Butadien-Styrol-Kautschuk, Styrolgehalt 25 Gew.-%

$a_k$ nach DIN 53 453

| Bsp. 8 | Pfropfpolymerisat | | | Polymermischung MPC/Pfropfpolymerisat (Gew.T.) | Kerbschlagzähigkeit der Mischung $a_k$ (kJ/m$^2$) |
|---|---|---|---|---|---|
| | Aus Bsp. 3 | Grundlage Polybutadien (% des Pfropfpolymerisats) | Verhältnis Pfropfmonomere Styrol/AN (Gew.T.) | | |
| a | a | 35 | 100/0 | 1/1 | 10 |
| b | b | 35 | 92/8 | 1/1 | 17 |
| c | c | 35 | 87/13 | 1/1 | 17 |
| d | d | 35* | 92/8 | 1/1 | 16 |
| e | e | 35 | 72/28 | 1/1 | 7 |
| f | f | 70 | 100/0 | 1/1 | 6 |
| g | g | 70 | 92/8 | 1/1 | 10 |
| h | h | 70 | 72/28 | 1/1 | 5 |

Beispiel 9: Schlagzähigkeit von Mischungen aus MPC und verschiedenen Pfropfpolymerisaten auf Basis von Acrylat- und von EPDM-Kautschuk

Aus Pfropfpolymeren auf der Basis von Polybutylacrylat- und von Ethylen-Propylen-Dien-Kautschuken, wurden, wie in Bsp. 7 beschrieben, über die Schmelze Mischungen hergestellt und diese zu Prüfkörpern verarbeitet. Bei den Pfropfpolymeren handelt es sich um Suspensionspfropfpolymerisate (Basis Polybutylacrylat) und um Lösungspfropfpolymerisate (Ethylen-Propylen-Dien-Kautschuke), wie im Beispiel 3 i, j, k, l, beschrieben. Es zeigt sich, daß die erfindungsgemäßen Mischungen (Bsp. 9 b und d) gegenüber bekannten Mischungen (Bsp. 9 a, c) eine beträchtlich verbesserte Kerbschlagzähigkeit aufweisen.

Tabelle Bsp. 9: Schlagzähigkeit von Mischungen aus MPC und verschiedenen Pfropfpolymerisaten auf Basis von Acrylat- und von EPDM-Kautschuken

$a_k$ nach DIN 53 453

| Bsp. 9 | Pfropfpolymerisat | | | | Mischung MPC/ Pfropfpolymerisat (Gew.T.) | Kerbschlagzähigkeit Mischung $a_k$ (kJ/m$^2$) |
|---|---|---|---|---|---|---|
| | Aus Bsp. 3 | Grundlage (% des Pfropfpolymerisats) Polybutylacrylat | EPDM | Verhältnis Pfropfmonomere (Gew.T.) Styrol/AN | | |
| a | i | 35 | | 100/0 | 1/1 | 8 |
| b | j | 35 | | 91/9 | 1/1 | 14 |
| c | k | | 35 | 100/0 | 1/1 | 8 |
| d | l | | 35 | 91/9 | 1/1 | 15 |

Patentansprüche

1. Polymerischungen aus

a) 10 - 90 Gew.-% eines aromatischen Polycarbonats, dessen lineare Ketten zu mindestens 80 Gew.-% aus wiederkehrenden Struktureinheiten der Formel (1)

(1) 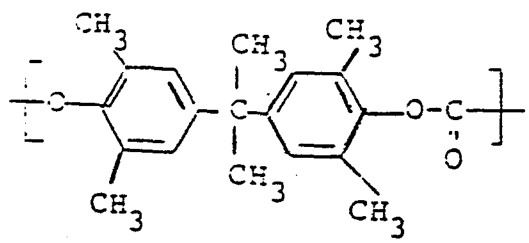

und zu höchstens 20 Gew.-% aus wiederkehrenden Einheiten der Formel (2) bestehen,

(2) 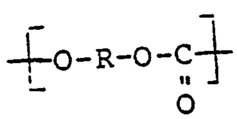

in der O-R-O einen Diphenyl-Rest, abgeleitet von anderen Bis(hydroxyphenyl)-alkanen, die auch kernalkyliert oder kernhalogeniert sein können, bedeutet,

b) 90 - 10 Gew.-% eines Styrol-Acrylnitril-Copolymeren und/oder

c) 90 - 10 Gew.-% eines Pfropfpolymerisates, bestehend aus 10 - 95 Gew.-% eines Styrol-Acrylnitril-Copolymeren und 90 - 5 Gew.-% eines Butadienkautschuks mit 0 - 50 Gew.-% an Comonomeren neben Butadien, eines Ethylen-Propylen-Dien-Kautschuks oder eines Kautschuks aus Acrylaten mit 0 - 30 Gew.-% anderer Comonomerer, hergestellt durch Polymerisation von Styrol-Acrylnitril-Gemischen in Gegenwart eines der genannten Kautschuke,

wobei die Summe der Gew.-% aus a) + b) + c) jeweils 100 Gew.-% ist,

dadurch gekennzeichnet, daß der Acrylnitrilanteil im Styrol-Acrylnitril-Copolymeren in b) und in c) 6 bis 15 Gew.-% beträgt.

2. Polymermischungen gemäß Anspruch 1, dadurch gekennzeichnet, daß der Acrylnitrilanteil im Styrol-Acrylnitril-Copolymeren in b) und in c) 7 bis 10 Gew.-% beträgt.

3. Verfahren zur Herstellung von Polymermischungen des Anspruchs 1, dadurch gekennzeichnet, daß man

a) 10 bis 90 Gew.-% der Polycarbonate des Anspruchs 1 mit

b) 90 bis 10 Gew.-% der Styrol-Acrylnitril-Copolymeren des Anspruchs 1 und/oder

c) 90 bis 10 Gew.-% der Pfropfpolymerisate des Anspruchs 1, wobei die Summe der Gew.-% aus

a) + b) + c) jeweils 100 Gew.-% beträgt, bei Temperaturen von 255°C bis 340°C auf Extrudern oder Knetern vermischt.

4. Verfahren zur Weiterverarbeitung von Polymermischungen des Anspruchs 1 zu Formkörpern, dadurch gekennzeichnet, daß man die Polymermischungen bei Temperaturen von 265°C bis 340°C auf Extrudern, Spritzgießmaschinen oder Hochtemperaturpressen verformt.